(19) **Europäisches Patentamt / European Patent Office / Office européen des brevets**

(11) **EP 2 956 691 B1**

(12) **FASCICULE DE BREVET EUROPEEN**

(45) Date de publication et mention
de la délivrance du brevet:
**14.06.2017 Bulletin 2017/24**

(21) Numéro de dépôt: **14710017.6**

(22) Date de dépôt: **17.02.2014**

(51) Int Cl.:
*F16H 61/02* ^(2006.01)   *F16H 61/16* ^(2006.01)

(86) Numéro de dépôt international:
**PCT/FR2014/050316**

(87) Numéro de publication internationale:
**WO 2014/125234 (21.08.2014 Gazette 2014/34)**

(54) **PROCEDE DE CONTROLE DES RETROGRADAGES D'UNE TRANSMISSION AUTOMATIQUE EN MODE MANUEL**

VERFAHREN ZUR STEUERUNG VON HERUNTERSCHALTEN EINES AUTOMATIKGETRIEBES IM MANUELLEN MODUS

METHOD FOR CONTROLLING DOWNSHIFTS OF AN AUTOMATIC TRANSMISSION IN MANUAL MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2013 FR 1351301**

(43) Date de publication de la demande:
**23.12.2015 Bulletin 2015/52**

(73) Titulaire: **Renault S.A.S.**
**92100 Boulogne-Billancourt (FR)**

(72) Inventeur: **PLANCHE, Grégory**
**F-91400 Orsay (FR)**

(56) Documents cités:
| | |
|---|---|
| **EP-A1- 2 251 568** | **DE-A1- 10 108 933** |
| **DE-A1- 19 740 647** | **JP-A- 2006 258 125** |
| **US-A1- 2010 004 094** | **US-A1- 2010 305 823** |

Printed by Jouve, 75001 PARIS (FR)

**Description**

La présente invention se rapporte au contrôle des transmissions automatiques.

Elle concerne les stratégies de commande implantées dans une unité de calcul de groupe motopropulseur (GMP) comportant un moteur thermique associé ou non à une machine électrique, couplé avec une transmission automatique à rapports discrets, comme connu de US2010/0305823 divulguant les caractéristiques du préambule de la revendication 1.

Plus précisément, elle a pour objet un procédé de contrôle des rétrogradages d'une transmission automatique en mode manuel par comparaison d'un régime prévisible sur le rapport n-1 calculé en fonction de la vitesse du véhicule sur ce rapport, avec un seuil de régime autorisé.

Elle trouve son application sur tout véhicule dont la motorisation est associée à une transmission automatique ou automatisée à train épicycloïdal ou double embrayage (DCT pour « Dual Clutch Transmission »).

Cette invention trouve une application privilégiée, mais non exclusive, sur des véhicules à caractère sportif équipés d'une transmission automatique.

L'optimisation du point de fonctionnement d'un GMP hybride ou thermique avec une transmission automatique, s'effectue en fonction de contraintes de consommation, d'agrément de conduite, d'acoustique, et d'exigences de dépollution. Dans le cas d'un moteur thermique couplé avec une transmission automatique à rapports discrets, la stratégie de contrôle des changements de rapports dite « ASC » pour « Automatic Shift Control » a pour objet de choisir le rapport de boîte le mieux adapté (en fonction de la volonté conducteur et des conditions environnementales), pour optimiser le point de fonctionnement du GMP.

Lorsque la transmission dispose à la fois d'un mode de pilotage automatique et d'un mode de pilotage manuel, le conducteur a la possibilité de contrôler les changements de rapports manuellement en sélectionnant le mode manuel. Sur certains véhicules, il a en plus la possibilité d'intervenir manuellement sur les changements de rapports de manière temporaire, sans sortir du mode automatique.

Le régime prévisible de l'arbre primaire $n\_prim\text{-}(n)$ d'une transmission automatique sur chaque rapport n, est généralement calculé, à partir de la vitesse du véhicule, selon une formule du type :

$$n\_prim\_(n) = \frac{Veh\_speed * tot\_rat(n) * 1000}{60 * 2 * \pi * whl\_rad},$$

dans laquelle:

$n\_prim\_(n)$ est exprimé en tr/min

$Tot\_rat$ est le rapport de démultiplication total, égal à :

$$\frac{dmul\_gear(n)}{dmul\_diff},$$

où

- $dmul\_gear\,(n)$ est le rapport de démultiplication lié au rapport considéré,
- $dmul\_diff$ est le rapport de démultiplication du différentiel,
- $Veh\_speed$ est la vitesse du véhicule en km/h, et
- $Whl\_rad$ est le rayon de la roue en m.

Un seuil d'autorisation statique de rétrogradage $nmax\_ena\_dwshf$ sur chaque rapport est par ailleurs établi, par des cartographies. Ce seuil prend en compte le régime de rupteur du moteur. Lors d'une demande de rétrogradage en mode manuel, le régime prévisionnel de l'arbre primaire du rapport n-1, $n\_prim\_(n\text{-}1)$, peut ainsi être comparé au seuil d'autorisation statique de rétrogradage $(nmax\_ena\_dwshf)$ du rapport n. Le changement de rapport est autorisé si $n\_prim(n\text{-}1) < nmax\_ena\_dwshf(n\text{-}1)$. Il est refusé si $n\_prim(n\text{-}1) > nmax\_ena\_dwshf(n\text{-}1)$.

Comme indiqué plus haut, cette méthode est satisfaisante dans le cas de faibles freinages, ou si le conducteur en ne cherche pas à réaliser des rétrogradages à des régimes élevés. Cependant, si le conducteur souhaite adopter une conduite sportive, la méthode trouve ses limites. En effet, la décélération du véhicule n'est pas prise en compte. Par ailleurs, les changements de rapport ne sont pas instantanés (environ 500 ms). En cas de fort freinage (autour de 1 G), les demandes de rétro peuvent ainsi être refusées, alors que l'intervalle de temps entre la demande de rétro et sa réalisation le permettrait.

Ces refus sont contrariants pour un conducteur expérimenté, dès lors que sa perception du gradient de vitesse du véhicule lui laisse penser que le rétrogradage demandé est possible. De même, il peut s'étonner que le régime moteur après un rétrogradage n'atteigne jamais des valeurs proches du seuil de régime maximal du moteur.

En résumé, les transmissions automatiques disposant d'un mode de pilotage manuel, souffrent souvent du reproche que si le conducteur souhaite adopter une conduite sportive en mode manuel en réalisant des freinages appuyés, il n'a ni la possibilité de réaliser des rétrogradages à des seuils de régime proches du régime de rupteur du moteur thermique, ni celle d'anticiper des rétrogradages pour palier le temps de latence entre la demande et la réalisation du changement de rapport descendant.

La présente invention vise à résoudre le problème des refus de rétrogradage à des régimes élevés en cas de fortes décélérations.

Elle propose pour cela de prendre en considération la décélération du véhicule en cas de forts freinages et de fortes décélérations, dans la gestion du mode manuel d'une transmission automatique.

Dans ce but, elle prévoit que la valeur réelle de la vitesse soit remplacée dans le calcul du régime prévisible sur le rapport n-1, en cas de fortes décélérations, par une valeur anticipée en fonction :

- de la décélération du véhicule,
- de la vitesse réelle, et
- du rapport courant.

De préférence, l'écart de vitesse entre la vitesse réelle et la vitesse anticipée dépend du caractère plus ou moins sportif de la conduite.

La présente invention sera mieux comprise à la lecture de la description suivante d'un mode de réalisation non limitatif de celle-ci, en se reportant aux dessins annexés, sur lesquels :

- la figure 1 est un graphique illustrant sur un exemple l'allure de la vitesse anticipée en fonction de la vitesse du véhicule,
- la figure 2 résume la stratégie de commande, et
- la figure 3 met évidence les moyens de stabilisation du signal de vitesse anticipée.

En reprenant la formule indiquée plus haut, le régime prévisible de l'arbre primaire d'une transmission automatique après rétrogradage sur un rapport n-1 peut être calculé, à tout moment, à partir de la vitesse du véhicule suivant la formule :

$$n\_prim\_(n-1) = \frac{Veh\_speed * tot\_rat(n-1) * 1000}{60 * 2 * \pi * whl\_rad} \quad (1),$$

dans laquelle :

- $n\_prim\_(n-1)$ est le régime sur le rapport n-1 exprimé en tours par minutes,
- $Tot\_rat$ est le rapport de démultiplication total de la transmission lié au rapport courant, et
- $Whl$ est le rayon de la roue en mètres.

Ce procédé permet de contrôler les rétrogradages d'une transmission automatique en mode manuel en comparant un régime prévisible sur le rapport n-1 calculé en fonction de la vitesse du véhicule sur ce rapport avec un seuil de régime autorisé : le rétrogradage est autorisé si le régime prévisible est inférieur au seuil d'autorisation. Il est interdit dans le cas contraire

En calculant une vitesse « anticipée » inférieure à la vitesse réelle instantanée, il est possible de diminuer la valeur du régime prédictif sur le rapport n-1, de manière à ce que la condition $n\_prim(n-1) < nmax\_ena\_dwshf(n-1)$ soit vraie, et à autoriser en fortes décélérations un changement de rapport interdit avec la valeur réelle. La formule (1) devient alors :

$$n\_prim\_(n-1) = \frac{Veh\_speed\_ant * tot\_rat(n-1) * 1000}{60 * 2 * \pi * whl\_rad} \quad (2)$$

Avec cette nouvelle valeur de vitesse, on ne compare plus au seuil d'autorisation statique, un régime prévisionnel « réel », mais un régime prévisionnel « anticipé ». Ce changement de seuil permet de réaliser des rétrogradages à des régimes plus élevés, lors de fortes décélérations.

Le calcul de la « vitesse anticipée » peut s'opérer en calculant un écart (« offset »), fonction de la décélération du véhicule, pour le soustraire à la vitesse instantanée du véhicule. Les informations nécessaires au calcul de la vitesse anticipée sont les suivantes :

- la décélération du véhicule lorsque la pédale de frein est appuyée *ac_brk en m/s²*,
- la vitesse du véhicule : *veh_speed, en km/h*,
- le rapport courant : *asc_gear_req_raw*,
- les booléens d'activation des différents modes de conduite possibles :*rst_race_mode* pour un mode course, et *rst_sport_mode* pour un mode sport,
- la décélération minimale d'autorisation d'utilisation de cette stratégie avec l'ajout d'une hystérésis pour éviter les phénomènes de pompage : *Cxx_vsthd_out_accel_thd* (seuil maxi, et *Cxx_vsthd_in_accel_thd* (seuil mini), et
- le signal indiquant qu'un changement de rapport est en cours : *gear_shf*.

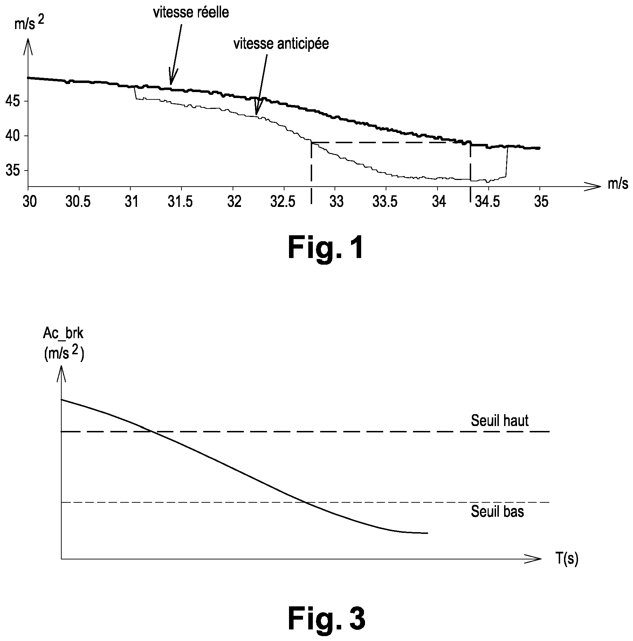

L'offset de vitesse, mis en évidence dans l'exemple non limitatif de la figure 1, est avantageusement fourni par une cartographie à deux dimensions, fonction de la valeur de décélération et du rapport courant. Il est également possible de différencier les valeurs de calibration en fonction du mode sélectionné (normal, sport et course), par trois cartographie distinctes. La variable *veh_speed_ant_ra*w ainsi calculée, est en principe consolidée pour donner la variable finale *veh_speed_ant*. La consolidation du signal est une protection, en cas de mauvais calcul de la décélération *ac_brk*. Elle consiste à figer sa valeur lors d'un changement de rapport et à s'assurer en continu que la vitesse anticipée est toujours saturée par la valeur de la vitesse réelle.

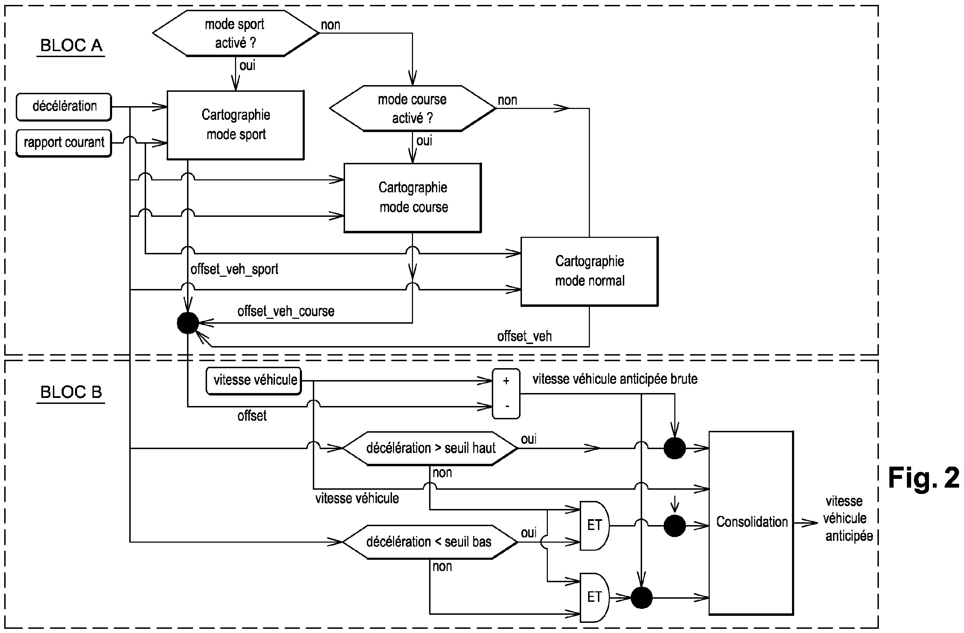

Le calcul de vitesse anticipée décrit sur la figure 2 se décompose en deux blocs. Le bloc A est consacré au calcul de l'écart de vitesse véhicule, pouvant s'élever jusqu'à 60 km/h. Il est fonction de plusieurs paramètres. L'écart de vitesse entre la vitesse réelle et la vitesse anticipée dépend du caractère plus ou moins sportif de la conduite, en particulier du choix par le conducteur d'un programme de conduite plus ou moins sportif, s'il en a le choix, en appuyant sur un bouton de sélection, entre un mode « mode normal », un « mode sport », et un « mode course » . L'écart de vitesse entre la vitesse réelle et la vitesse anticipée dépend ainsi du caractère plus ou moins sportif de la conduite. Sur le schéma, l'écart est désigné « *Offset_veh* » en mode normal, « *Offset_veh_sport* » en mode sport, et « *Offset_veh_race* » en mode course : il croît en passant du mode normal au mode sport, et au mode course.

Comme indiqué sur le schéma, l'écart de vitesse est fourni par des cartographies différenciées, en fonction du programme de conduite sélectionné. La cartographie correspondante (cartographie mode normal, mode sport ou mode sport) exploite la valeur de décélération du véhicule « *ac_brk* » en m/s² et celle du rapport courant « *asc_gear_req_raw* » (1, 2, 3, 4, 5, ou 6) pour une boîte six rapports. En rangées, un vecteur « décélération » « Ctb_vsthd_decl » permet d'interpoler la décélération (en m/s²) entre les valeurs [0 0.5 1 3 5 10] en mode normal. En colonnes, un vecteur rapport demandé « Ctb_ratio_gear_2d_c » peut prendre les valeurs [1 2 3 4 5 6].

Cette cartographie détermine la valeur de l'offset *"Cmp_vsthd_offset"* en km/h, de la manière suivante dans l'exemple di-dessous. Pour une décélération de 6 m/s², la valeur retenue est de 7.5 m/s² (moyenne entre 5 et 10 m/s²). Si le véhicule est en cinquième à 130 km/h en subissant une décélération de 5 m/s², l'écart de vitesse à appliquer est donné par la table.

Dans le bloc B, l'écart de vitesse est soustrait à la vitesse réelle du véhicule. En reprenant l'exemple précédent, s'il vaut 30 *km/h*, et que la vitesse réelle du véhicule est de 130 km/h, la différence *veh_speed_ant_raw* est égale à 100 km/h. L'application de la stratégie est cependant soumise à certaines conditions liées à la valeur de la décélération. Conformément à la figure 3, la décélération est comparée à deux seuils : un seuil haut d'entrée dans la stratégie, et un seuil bas de sortie de la stratégie. La stratégie est toujours activée au dessus du seuil haut. Elle est toujours désactivée en dessous du seuil inférieur. La vitesse réelle est remplacée par la vitesse anticipée à partir du moment où la décélération est supérieure à un premier seuil, et jusqu'à ce quelle passe sous un deuxième inférieur au premier. Si la décélération passe sous le deuxième seuil, la vitesse réelle est conservée tant que la décélération ne repasse pas au dessus du premier seuil. Si l'accélération dépasse le premier seuil, la vitesse anticipée est conservée tant qu'elle ne repasse pas sous le deuxième seuil. Cette protection permet d'éliminer les cas aberrants, et de réduire les phénomènes d'oscillation ou de « pompage » entre l'état activé et l'état désactivé.

Le signal de vitesse anticipée brut est introduit dans un bloc de consolidation qui délivre le signal de vitesse de véhicule anticipée. La consolidation du signal consiste à figer la valeur lors d'un changement de rapport et de s'assurer en continu que la vitesse anticipée est toujours saturée par la valeur de la vitesse réelle. Ceci est une protection en cas de mauvais calcul de la décélération *ac_brk*.

En résumé, la valeur réelle de la vitesse est remplacée dans le calcul du régime prévisible sur le rapport n-1, par une valeur anticipée en fonction :

- de la décélération du véhicule,

- de sa vitesse réelle, et
- du rapport courant.

Si la stratégie est activée, le signal consolidé est utilisé pour calculer le régime prévisible sur le rapport n-1, selon la formule :

$$n\_prim\_(n-1) = \frac{Veh\_speed\_ant * tot\_rat(n-1) * 1000}{60 * 2 * \pi * whl\_rad}$$

La vitesse anticipée est utilisée seulement en mode de conduite manuel, si le conducteur l'a sélectionné, ou s'il est entré temporairement dans un mode manuel impliquant un retour forcé en mode automatique après une temporisation.

Les principaux avantages de l'invention sont les suivants :

- elle permet de contourner une limitation technique de la transmission automatique et du moteur interdisant les passages rétro à régime élevé, en raison de la durée de changement de rapport,
- elle est facile à mettre en oeuvre, car elle ne nécessite aucune mise au point particulière,
- aucune modification de structure de la transmission n'est nécessaire, car elle est réalisée par modification du logiciel de contrôle de la transmission, si bien que ses coûts de mise en oeuvre sont très faibles,
- la solution est transversale, et applique à toutes les transmissions automatiques ou automatisées dites applications dites « deux pédales » qui embarquent des lois de passage automatique de vitesses,
- enfin, elle est robuste, et la prestation obtenue a le niveau de qualité souhaité.

**Revendications**

1. Procédé de contrôle des rétrogradages d'une transmission automatique en mode manuel par comparaison d'un régime prévisible sur le rapport n-1 calculé en fonction de la vitesse du véhicule sur ce rapport avec un seuil de régime autorisé, dans lequel le rétrogradage est autorisé si le régime prévisible est inférieur au seuil d'autorisation et interdit dans le cas contraire, **caractérisé en ce que**, lors de fortes décélérations, la valeur réelle de la vitesse est remplacée dans le calcul du régime prévisible sur le rapport n-1 par une valeur anticipée en fonction :

   - de la décélération du véhicule,
   - de sa vitesse réelle, et
   - du rapport courant.

2. Procédé de contrôle des rétrogradages selon la revendication 1, **caractérisé en ce que** l'écart de vitesse entre la vitesse réelle et la vitesse anticipée dépend du caractère plus ou moins sportif de la conduite.

3. Procédé de contrôle des rétrogradages selon la revendication 2, **caractérisé en ce que** l'écart de vitesse est établi en fonction du choix par le conducteur d'un programme de conduite plus ou moins sportif.

4. Procédé de contrôle des rétrogradages selon la revendication 2 ou 3, **caractérisé en ce que** l'écart de vitesse est fourni par une cartographie à deux dimensions, en fonction du rapport courant et de la décélération.

5. Procédé de contrôle selon la revendication 4, **caractérisé en ce que** l'écart de vitesse est fourni par des cartographies différenciées en fonction du programme de conduite sélectionné.

6. Procédé de contrôle des rétrogradages selon l'une des revendications précédentes, **caractérisé en ce que** la vitesse réelle est remplacée par la vitesse anticipée à partir du moment où la décélération est supérieure à un premier seuil, et jusqu'à ce quelle passe sous un deuxième inférieur au premier.

7. Procédé de contrôle selon la revendication 6, **caractérisé en ce que** si la décélération passe sous le deuxième seuil, la vitesse réelle est conservée tant que la décélération ne repasse pas au dessus du premier seuil et **en ce que** si l'accélération dépasse le premier seuil, la vitesse anticipée est conservée tant qu'elle ne repasse pas sous le deuxième seuil.

8. Procédé de contrôle selon l'une des revendications précédentes, **caractérisé en ce que** le signal de vitesse anticipée est figé lors des changements de rapport.

9. Procédé de contrôle selon l'une des revendications précédentes, **caractérisé en ce que** la vitesse réelle est remplacée par la vitesse anticipée si le conducteur a sélectionné un mode de conduite manuel.

10. Procédé de contrôle selon l'une des revendications précédentes, **caractérisé en ce que** la vitesse réelle est remplacée par la vitesse anticipée si le conducteur est entré dans un mode manuel temporaire.

**Patentansprüche**

1. Verfahren zur Steuerung des Herunterschaltens eines Automatikgetriebes im manuellen Betrieb durch Vergleich einer vorhersehbaren Drehzahl im Gang n-1 berechnet abhängig von der Geschwindigkeit in diesem Gang mit einer erlaubten Drehzahlschwelle, wobei das Herunterschalten erlaubt ist, wenn die vorhersehbare Drehzahl niedriger ist als die Erlaubnisschwelle, und im gegenteiligen Fall verboten ist, **dadurch gekennzeichnet, dass** bei starken Drehzahlverringerungen der effektive Wert der Geschwindigkeit in der Berechnung der vorhersehbaren Drehzahl im Gang n-1 durch einen voraussichtlichen Wert ersetzt wird, abhängig von:

   - der Drehzahlverringerung des Fahrzeugs,
   - seiner effektiven Geschwindigkeit, und
   - dem aktuellen Gang.

2. Verfahren zur Steuerung der Herunterschaltungen nach Anspruch 1, **dadurch gekennzeichnet, dass** die Geschwindigkeitsabweichung zwischen der effektiven Geschwindigkeit und der voraussichtlichen Geschwindigkeit vom mehr oder weniger sportlichen Fahrverhalten abhängt.

3. Verfahren zur Steuerung der Herunterschaltungen nach Anspruch 2, **dadurch gekennzeichnet, dass** die Geschwindigkeitsabweichung abhängig von der Wahl eines mehr oder weniger sportlichen Fahrprogramms durch den Fahrer erstellt wird.

4. Verfahren zur Steuerung der Herunterschaltungen nach Anspruch 2 oder 3, **dadurch gekennzeichnet, dass** die Geschwindigkeitsabweichung von einem zweidimensionalen Kennfeld abhängig vom aktuellen Gang und von der Drehzahlverringerung geliefert wird.

5. Steuerverfahren nach Anspruch 4, **dadurch gekennzeichnet, dass** die Geschwindigkeitsabweichung von abhängig vom ausgewählten Fahrprogramm unterschiedlichen Kennfeldern geliefert wird.

6. Verfahren zur Steuerung der Herunterschaltungen nach einem der vorhergehenden Ansprüche, **dadurch gekennzeichnet, dass** die effektive Geschwindigkeit ab dem Moment durch die voraussichtliche Geschwindigkeit ersetzt wird, in dem die Drehzahlverringerung höher ist als eine erste Schwelle, und bis sie eine zweite niedriger als die erste unterschreitet.

7. Steuerverfahren nach Anspruch 6, **dadurch gekennzeichnet, dass**, wenn die Drehzahlverringerung die zweite Schwelle unterschreitet, die effektive Geschwindigkeit beibehalten wird, so lange die Drehzahlverringerung die erste Schwelle nicht wieder überschreitet, und dass, wenn die Beschleunigung die erste Schwelle überschreitet, die voraussichtliche Geschwindigkeit beibehalten wird, so lange sie nicht wieder die zweite Schwelle unterschreitet.

8. Steuerverfahren nach einem der vorhergehenden Ansprüche, **dadurch gekennzeichnet, dass** das Signal der voraussichtlichen Geschwindigkeit bei Gangwechseln fixiert wird.

9. Steuerverfahren nach einem der vorhergehenden Ansprüche, **dadurch gekennzeichnet, dass** die effektive Geschwindigkeit durch die voraussichtliche Geschwindigkeit ersetzt wird, wenn der Fahrer einen manuellen Fahrmodus gewählt hat.

10. Steuerverfahren nach einem der vorhergehenden Ansprüche, **dadurch gekennzeichnet, dass** die effektive Geschwindigkeit durch die voraussichtliche Geschwindigkeit ersetzt wird, wenn der Fahrer in einen vorübergehenden manuellen Modus übergegangen ist.

**Claims**

1. Method for controlling downshifts of an automatic gearbox in manual mode by comparison of a foreseeable engine speed in the ratio n-1 calculated as a function of the speed of the vehicle in this ratio with an authorized engine-speed threshold, wherein the downshift is authorized if the foreseeable engine speed is lower than the authorization threshold and prevented otherwise, **characterized in that**, during strong decelerations, the actual value of the vehicle speed is replaced in the calculation of the foreseeable engine speed in the ratio n-1 by a value anticipated as a function:

    - of the deceleration of the vehicle,
    - of its actual speed, and
    - of the current ratio.

2. Method for controlling downshifts according to Claim 1, **characterized in that** the difference in speed between the actual speed and the anticipated speed depends on the more or less sporty driving style.

3. Method for controlling downshifts according to Claim 2, **characterized in that** the difference in speed is established as a function of the choice by the driver of more or less sporty driving.

4. Method for controlling downshifts according to Claim 2 or 3, **characterized in that** the difference in speed is provided by a two-dimensional map, as a function of the current ratio and the deceleration.

5. Control method according to Claim 4, **characterized in that** the difference in speed is provided by maps differentiated as a function of the selected driving program.

6. Method for controlling downshifts according to one of the preceding claims, **characterized in that** the actual speed is replaced by the anticipated speed as soon as the deceleration is greater than a first threshold and until it drops below a second threshold lower than the first.

7. Control method according to Claim 6, **characterized in that**, if the deceleration drops below the second threshold, the actual speed is retained as long as the deceleration does not pass back over the first threshold, and **in that**, if the acceleration exceeds the first threshold, the anticipated speed is retained as long as it does not drop below the second threshold again.

8. Control method according to one of the preceding claims, **characterized in that** the anticipated-speed signal is fixed during changes in ratio.

9. Control method according to one of the preceding claims, **characterized in that** the actual speed is replaced by the anticipated speed if the driver has selected a manual driving mode.

10. Control method according to one of the preceding claims, **characterized in that** the actual speed is replaced by the anticipated speed if the driver has entered a temporary manual mode.

**Fig. 1**

**Fig. 3**

Fig. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100305823 A